# EUROPÄISCHE PATENTANMELDUNG

(11) **EP 1 525 954 A2**
(43) Veröffentlichungstag der Anmeldung: **27.04.2005**
(21) Anmeldenummer: 04025108.4
(22) Anmeldetag: 22.10.2004
(51) Int. Cl.: B25J 9/16

(54) **Verfahren und Vorrichtung zum Positionieren eines Handhabungsgerätes**

(30) Priorität: 23.10.2003 DE 10349361
(71) Anmelder: KUKA Roboter GmbH, 86165 Augsburg (DE)
(72) Erfinder: Hietmann, Gerhard, 86405 Herbertshofen (DE); Bunsendal, Jens, 86153 Augsburg (DE)
(74) Vertreter: Lempert, Jost, Dipl.-Phys. Dr. rer.nat.

(57) **Zusammenfassung**

Ein Verfahren zum zumindest zeitweise hochgenauen Positionieren zumindest eines Teils eines Handhabungsgeräts in einem absolut bekannten Zielpunkt, insbesondere eines Werkzeugs eines Mehrachs-Industrieroboters zeichnet sich dadurch aus, dass eine Position des zu positionierenden Teils des Handhabungsgeräts mittels eines Inertialmesssystems bestimmt und aus einer Abweichung der Position des Inertialmesssystems vom Zielpunkt eine Korrektur für die Bewegung des Handhabungsgeräts bestimmt wird. Weiterhin betrifft die Erfindung eine zur Durchführung des erfindungsgemäßen Verfahrens geeignete Vorrichtung mit einem Inertialmesssystem. Durch den Einsatz einer Inertialsensorik, insbesondere nahe der Werkzeugspitze eines Roboters, lassen sich Zielpunkte innerhalb eines gewissen Zeit-Raum-Bereiches mit hoher Genauigkeit anfahren.

**Bezugszeichenliste**

- 1: Roboter
- 1.1: Karussell
- 1.2: Schwinge
- 1.3: Arm
- 1.4: Hand
- 1.4a: Ende (von 1.4)
- 1.5: Handflansch
- 1.6: Steuerungseinrichtung
- 1.6a: Überwachungseinrichtung
- 1.6b: Vergleichseinrichtung
- 1.6c: Speichereinrichtung
- 1.6d: Kalibriereinrichtung
- 1.7: Leitung
- 2: Werkzeug
- 2.1: Werkzeugspitze (TCP)
- 3: Inertialmesssystem
- 4: externes (Absolut-)Messsystem
- 5: Objekt
- 6: Arbeitsbereich
- B: Bewegungsbahn
- B': absolutgenaue Bahn
- j: bejahte Abfrage
- M: Messbereich
- n: verneinte Abfrage
- p₀: erste Integrationskonstante
- P₁, P₂: Rückzugsbewegung
- R₁, R₂: Referenzpunkt
- S1-S29: Verfahrensschritte
- v₀: zweite Integrationskonstante
- X, X', X'': Anfangspositionen für Rückzugsbahn
- ZP: Zielpunkt

## Beschreibung

Die Erfindung betrifft ein Verfahren zum genauen Positionieren zumindest eines Teils eines Handhabungsgeräts, insbesondere eines Werkzeugs eines Mehrachs-Industrieroboters, in einem Zielpunkt. Weiterhin betrifft die Erfindung eine zur Durchführung des Verfahrens geeignete Vorrichtung mit einer Steuerungseinrichtung für eine Bewegungssteuerung des Handhabungsgeräts. Sie ist außerdem auf eine Verwendung einer Mehrzahl von erfindungsgemäßen Vorrichtungen und auf den Einsatz eines erfindungsgemäßen Verfahrens gerichtet.

In der industriellen Anwendung werden automatisierte Handhabungsgeräte, wie Mehrachs-Industrieroboter, im Folgenden kurz als Roboter bezeichnet, in Prozessen eingesetzt, die mit einer hohen Genauigkeitsanforderung an Bewegungen des Roboters und insbesondere der Spitze eines von ihnen geführten Werkzeugs (TCP: Tool Center Point) einhergehen. Exemplarisch für derartige Prozesse seien hier Laserschneiden, Laserschweißen, Plasmaschneiden usw. genannt.

Im Rahmen derartiger Anwendungen ist seit längerem bekannt, sogenannte "absolutgenaue" Roboter einzusetzen. Unter einem "absolutgenauen" Roboter sei im Folgenden ein automatisiertes Handhabungsgerät verstanden, dessen tatsächliche Position im Raum nahezu exakt, d.h. bis auf eine Abweichung in der Größenordnung einer Wiederholgenauigkeit des Roboters der von der Steuerung des Roboter angegebenen Position entspricht.

Um eine solche Übereinstimmung zu erreichen, muss die reale Kinematik des Roboters mit ihren auf Fertigungstoleranzen, Nachgiebigkeiten etc. beruhenden Fehlerquellen, wie Übertragungsfehlern, Verbiegungsfehlern, Reibungsfehlern oder dergleichen, auf das Rechenmodell der Steuerung übertragen werden. Mit anderen Worten: Die Robotersteuerung darf für Bahnberechnungen nicht ein ideales, unveränderliches Robotermodell zugrundelegen, sondern muss mit zusätzlichen Informationen über einen realen Zustand des zu bewegenden Roboters beliefert werden.

So ist beispielsweise aus der WO 01/76830 bekannt, einen Roboter so genau wie möglich zu modellieren und insbesondere durch ein Vermessen des Roboters eine Vielzahl von Modellparametern eines steuerungsinternen Robotermodells an die Wirklichkeit anzupassen. Hierbei ist insbesondere als nachteilig anzusehen, dass jegliches Modell die Wirklichkeit immer nur unvollständig abbildet. Es existieren also prinzipiell immer wieder stellungsabhängige Abweichungen der realen Roboterposition von der durch die Steuerung gegebenen Position im Arbeitsraum des Roboters. Abhilfe können hier nur immer komplexere Modelle schaffen, was jedoch entsprechend immer größere Rechenkapazitäten erfordert und die Steuerung komplex und fehleranfällig macht.

Ebenfalls aus der WO 01/76830 ist ferner ein Verfahren bekannt, bei dem Bewegungsbahnen eines Roboters mehrfach in einer Art Testbetrieb abgefahren und durch ein externes Messsystem aufgezeichnet werden. Aus den aufgezeichneten Bahnen wird eine Abweichung zwischen der von der Steuerung vorgegebenen Bahn und der tatsächlich aufgezeichneten Bahn bestimmt. Anschließend wird die Sollbahn des Roboters so deformiert, dass dieser nach der Korrektur möglichst genau die vom Anwender gewünschte Bahn trifft. Bei einem solchen Verfahren ist insbesondere als nachteilig anzusehen, dass die genannten Korrekturwerte immer unter bestimmten Randbedingungen, wie einer vorgegebenen Last, Temperatur, Werkzeugart und Aufstellort, aufgenommen werden. Ändern sich diese Randbedingungen, so stimmen die hinterlegten Korrekturwerte nicht mehr, und die Präzision des Roboters sinkt.

Die beiden genannten vorbekannten Verfahren berücksichtigen darüber hinaus nicht die Unzulänglichkeiten der in der Regel an einem Flansch der Roboterhand befestigten Werkzeuge, wie Spiel an bewegten Teilen, Elastizitäten oder dergleichen. Jedoch sind alle weitergehenden Anstrengungen, die Genauigkeit eines Roboters bzw. einer Roboterzelle zu verbessern, zum Scheitern verurteilt, wenn nicht auch die vorstehend genannten Unzulänglichkeiten eines Roboterwerkzeugs mit berücksichtigt werden.

Weiterhin ist aus der EP 1 189 121 ein Verfahren bekannt, bei dem mit einem externen Messsystem eine von der Robotersteuerung angefahrene Position mit einer tatsächlichen Position des Roboters verglichen und für diese Position ein Positionskorrekturwert bestimmt wird. Diese Vorgehensweise wird für zahlreiche Positionen im Raum wiederholt, und die Daten werden in der Steuerung abgespeichert. Im Betrieb wendet die Steuerung die hinterlegten Korrekturdaten entweder direkt als Korrekturwerte für die entsprechenden Positionen an oder interpoliert aus den Korrekturdaten Korrekturwerte für beliebige Zwischenpositionen.

Im Zuge der vorstehend genannten Verfahren kommen als Messsysteme insbesondere optische (Laser-)Messsysteme, wie Interferometer, Theodoliten und CCD-Kamera-Systeme zum Einsatz, aber auch mechanische Messeinrichtungen, wie dreidimensionale Messarmanordnungen oder Drahtsysteme, können Verwendung finden.

Aus den vorstehend diskutierten Ungenauigkeiten bekannter Steuerungsverfahren resultiert die grundsätzliche Einschränkung, dass eine direkte Erzeugung von Roboter-Steuerprogrammen aus CAD-Daten eines zu bearbeitenden Bauteils nicht möglich ist, da sie an der Ungenauigkeit der Roboter und der von ihnen geführten Werkzeuge scheitert. Auch bei den heutzutage bekannten absolutgenauen Robotern müssen die aus CAD-Daten abgeleiteten Bahnpunkte in der Regel manuell nachgeteacht werden, um im Betrieb die geforderte Genauigkeit zu erreichen.

Der Erfindung liegt die Aufgabe zugrunde, die Genauigkeit eines Robotersystems, d.h. eines automatisierten Handhabungsgeräts inklusive Flanschwerkzeug so zu verbessern, dass Raumpunkte innerhalb des Arbeitsbereichs des Roboters mit absoluter Genauigkeit angefahren und die vorstehend aufgeführten Kritikpunkte vermieden werden können. Auf diese Weise soll mittels der Erfindung eine Offline-Programmierung ohne manuelles Nachteachen ermöglicht werden.

Die Aufgabe wird bei einem Verfahren der eingangs genannten Art dadurch gelöst, dass eine Position des zu positionierenden Teils des Handhabungsgeräts mittels eines Inertialmesssystems bestimmt und aus einer Abweichung der Position des Inertialmesssystems vom Zielpunkt eine Korrektur für die Bewegung des Handhabungsgeräts bestimmt wird.

Eine Vorrichtung der eingangs genannten Art weist zur Lösung der Aufgabe ein zumindest in der Nähe des zu positionierenden Teils des Handhabungsgeräts an dem Handhabungsgerät angeordnetes, mit der Steuerungseinrichtung zusammenwirkendes Inertialmesssystem auf.

Erfindungsgemäß wird das Werkzeug am Roboterflansch und zwar vorzugsweise am Arbeitspunkt des Werkstücks selbst oder möglichst nahe an diesem, oder aber auch alternativ bei einem sehr starren Werkzeug der Roboterflansch selbst mit einem Inertialmesssystem versehen. Inertialmesssysteme messen grundsätzlich die Veränderung eines Bewegungszustandes, d.h. eine spezifische Kraft oder Beschleunigung. Ein bekanntes Inertialmesssystem ist der Kreisel, der bestrebt ist, eine Orientierung seiner Drehachse unter von außen auf ihn einwirkenden Kräften beizubehalten, wodurch sich eine Bewegung gegenüber einem Inertialsystem nachweisen lässt. Es existieren weitere Arten von inertialen Messsystemen, wie optische Gyroskope, elektrostatische Accerelometer oder dergleichen, die dem Fachmann bekannt sind.

Prinzipiell besitzen Inertialsensoren den Nachteil, dass ihre Messgenauigkeit mit der Zeit sinkt, da es sich bei derartigen Sensoren nicht um absolut sondern nur um relativ messende Sensoren handelt, bei denen sich Ungenauigkeiten im Messsystem, wie Drift oder dergleichen, aufsummieren. Um die bei Roboteranwendungen geforderte Genauigkeit aufrechtzuerhalten, sollte folglich ein Inertialmesssystem regelmäßig abgeglichen werden. Zu diesem Zweck ist in bevorzugter Ausgestaltung vorgesehen, dass zunächst ein Kalibrieren des Inertialmesssystem mittels eines (externen) Messsystems erfolgt und/oder dass das Kalibrieren durch Anfahren eines bekannten Zielpunkts im Raum erfolgt, wobei insbesondere zum Kalibrieren vor dem Positionieren in einem Arbeitsbereich des Handhabungsgeräts zumindest ein Referenzpunkt in der Nähe des Zielpunkts durch ein in dem Arbeitsbereich des Handhabungsgeräts wirksames Absolut-Messsystem absolut bestimmt wird, wobei das zu positionierende Teil des Handhabungsgeräts zu dem Referenzpunkt verfahren wird, im Referenzpunkt das zumindest in der Nähe des zu positionierenden Teils an dem Handhabungsgerät befindliche Inertialmesssystems kalibriert wird und anschließend das zu positionierende Teil des Handhabungeräts zum Zielpunkt gemäß Anspruchs 1 bewegt wird. Hierzu kann die erfindungsgemäße Vorrichtung durch Vorsehen einer Kalibriereinrichtung zum Abgleichen des Inertialmesssystem im Referenzpunkt ausgebildet sein.

Ausgehend von einem bekannten, genau vermessenen Punkt (Referenzpunkt), der zum Abgleichen des Inertialmesssystems (Kalibrierung) dient und vorzugsweise in der Nähe eines anzufahrenden Zielpunkts angeordnet ist, verfährt der Roboter demnach programmgesteuert zu diesem Zielpunkt. Dabei wird zumindest in der Nähe des Zielpunkts durch das Inertialmesssystem die tatsächliche Position im Raum ermittelt und damit die Roboterbewegung so manipuliert, dass der Zielpunkt hochgenau getroffen wird. Im Gegensatz zum Gegenstand der WO 01/76830 wird erfindungsgemäß keine zweite Roboter-Bewegungsbahn aufgenommen und anschließend anhand der Abweichungen zwischen Soll- und Istbahn ein Robotermodell angepasst, sondern die Sensordaten vom Inertialmesssystem werden in der Steuerung des Roboters direkt benutzt, um diesen an die Zielposition zu führen. Im Zuge einer bevorzugten Weiterbildung des erfindungsgemäßen Verfahrens wird in einem zweiten Schritt die erreichte Zielposition des Handhabungsgeräts anstelle einer in der Steuerungseinrichtunq des Handhabunqsqeräts gespeicherten Zielposition abgespeichert, d.h. die im Steuerungsprogramm abgespeicherte Zielposition so verändert, dass sie mit der tatsächlich gewollten Zielposition übereinstimmt. Dieser Vorgang wird auch als "Nachteachen" von Punkten bezeichnet und kann erfindungsgemäß vollautomatisch erfolgen, so dass zeitintensives manuelles Nachbearbeiten von Bahnpunkten entfällt.

Dabei sind erfindungsgemäß folgende Szenarien möglich: Nach einer ersten, bevorzugten Weiterbildung des erfindungsgemäßen Verfahrens ist vorgesehen, dass Koordinaten des Referenzpunkts dauerhaft in einer mit der Steuerungseinrichtung des Handhabungsgeräts zusammenwirkenden Speichereinrichtung abgelegt und im Rahmen einer Wiederholungsgenauigkeit des Handhabungsgeräts angefahren werden. Der anschließend hochgenau angefahrene Zielpunkt wird dann automatisch nachgeteacht, so dass die programmierte Position bei einem neuen Programmlauf auch mit abgeschaltetem Inertialmesssystem hochgenau getroffen wird. Eine zweite bevorzugte Ausgestaltung des erfindungsgemäßen Verfahren sieht vor, dass wiederholt während der Bewegung zum Zielpunkt eine absolute Position des Handhabungsgeräts mittels des Inertialmesssystems bestimmt und die Bewegung an einen vorgegebenen Bahnverlauf angepasst wird. Die Steuerung regelt also mittels der permanenten Sensorik die Roboterposition nach; hierdurch wird nicht nur der Zielpunkt hochgenau angefahren, sondern die gesamte Bahn ist hochgenau.

Alternativ sieht eine weitere Variante des erfindungsgemäßen Verfahrens vor, dass a) ausgehend vom Referenzpunkt ein Punkt innerhalb der Wiederholgenauigkeit des Handhabungssystems angefahren, b) anschließend eine Positionsabweichung relativ zum gewünschten Zielpunkt mittels des Inertialmesssystems bestimmt und dann c) das Handhabungsgerät um die Positionsabweichung verfahren wird. Gemäß einer Weiterbildung dieser Verfahrensvariante werden die vorstehend genannten Schritte b) und c) zyklisch wiederholt, bis das zu positionierende Teil des Handhabungsgeräts in einem Toleranzbereich um den Zielpunkt positioniert ist.

Äußerst bevorzugte Weiterbildungen des erfindungsgemäßen Verfahrens sehen vor, dass eine Reihe von Zielpunkten nacheinander angefahren werden bzw. dass das Anfahren und Nachteachen von Zielpunkten vollautomatisch erfolgt. Auf diese Weise kann sich der Roboter selbständig auf neue Bauteile einstellen, wodurch Roboter-Steuerungsprogramme direkt von einem CAD-System übernommen werden können.

In Weiterbildung weist die erfindungsgemäße Vorrichtung ein in einem Arbeitsbereich des Handhabungsgeräts wirksames Absolut-Messsystem zum absoluten Bestimmen von Raumpositionen und/oder Positionen des Handhabungsgeräts und/oder ein in oder an dem Handhabungsgerät angeordnetes Messsystem zum Bestimmen von internen Koordinaten von Positionen des Handhabungsgeräts auf, wobei ggf. entsprechende Positionsangaben des Absolut- und Intern-Messsystems in einem Referenzpunkt einander in der Steuerungsrichtung zuordenbar sind. Weiterhin kann eine Vergleichseinrichtung zum Vergleichen einer durch das Inertialmesssystem gelieferten Positionsangabe zumindest in der Nähe des Zielpunkts mit einer Position des Zielpunkts vorgesehen sein, wobei ein von der Vergleichseinrichtung geliefertes Vergleichssignal für eine Positionskorrektur des Handhabungsgeräts durch die Steuerungseinrichtung nutzbar ist.

Im Rahmen einer vorteilhaften Weiterbildung des erfindungsgemäßen Verfahrens ist vorgesehen, dass während des Anfahrens von Zielpunkten eine seit der letzten Kalibrierung des Inertialmesssystems vergangene Zeit überwacht und beim Erreichen einer vorbestimmten Abgleichzeit eine erneute Kalibrierung des Inertialmesssvstems durchgeführt wird. Da Inertialsysteme auch auf bestimmte äußere Einwirkungen empfindlich reagieren, werden vorzugsweise weitere Bewegungsparameter des Handhabungsgeräts, wie Beschleunigungen, überwacht, wobei im Fall eines Erreichens jeweils vorbestimmter Grenzwerte wiederum eine erneute Kalibrierung des Inertialmesssystems durchgeführt wird.

Idealerweise sollte eine Kalibrierung vor Beginn eines neuen Prozesszyklus des Roboters erfolgen. Ist dies aufgrund einer Prozessdauer nicht möglich, z.B. durch Überschreiten der Ableichzeit, kann es erforderlich sein, während eines laufenden Prozesses den Inertialsensor neu abzugleichen, wozu eine Kalibrierposition (Referenzpunkt) angefahren werden muss. Bei einem Verfahren des Roboters zu dieser Position auf kürzestem Weg kann es zu einer Kollision mit im Arbeitsbereich des Roboters vorhandenen weiteren Objekten kommen. Um dies zu vermeiden, sieht eine äußerst bevorzugte Weiterbildung des erfindungsgemäßen Verfahrens vor, dass das Verfahren zum Referenzpunkt auf einer vorgegebenen Rückzugsbahn erfolgt. Zusätzlich kann das Handhabungsgerät bis zum Erreichen eines entlang seiner Bewegungsbahn definierten Anfangspunkts einer Rückzugsbahn rückwärts auf seiner vorherigen Bewegungsbahn verfahren werden. Derartige Anfangspunkte müssen entsprechend entlang der Bewegungsbahn definiert werden, so dass von ihnen aus eine Bewegung zum nächsten Referenzpunkt gefahrlos möglich ist.

In Weiterbildung der erfindungsgemäßen Vorrichtung ist vorgesehen, dass das Inertialmesssystem in einer festen, relativen Stellung zum zu positionierenden Teil des Handhabungsgeräts angeordnet ist. In diesem Fall führen das Inertialmesssystem und das zu positionierende Teil des Handhabungsgeräts bei Bewegung des Handbungsgeräts identische Bewegungen, d.h. Bewegungen mit verschwindender Relativbewegung aus. Positionsbestimmungen des Inertialmesssystems müssen folglich nur um einen festen Betrag korrigiert werden, um absolute Positionsangaben für das zu positionierende Teil des Handhabungsgeräts zu erhalten.

Vorzugsweise ist das Inertialmesssystem der erfindungsgemäßen Vorrichtung als Beschleunigungssensor ausgebildet. Dieser kann auf einem rein mechanischen, elektrostatischen, optischen oder einem anderen geeigneten Messprinzip aufbauen.

Da es sich bei einem Inertialmesssystem dem grundliegenden Messprinzip nach um ein lediglich relativ messendes Positionsmesssystem handelt, ist im Zuge der Kalibrierung jeweils ein Ausgangspunkt (Nullpunkt) der Inertialmessung festzulegen. Um durch regelmäßiges Nachkalibrieren ein Anwachsen von Messfehlern ausschalten zu können, ist im Zuge bevorzugter weiterer Ausgestaltungen der erfindungsgemäßen Vorrichtung vorgesehen, dass diese eine Überwachungseinrichtung zum Überwachen einerseits der seit der letzten Kalibrierung des Inertialmesssystems vergangenen Zeit und/oder andererseits von Bewegungsparametern des Handhabungsgeräts, wie einer Beschleunigung, aufweisen. Vorzugsweise wirkt die Überwachungseinrichtung beim Erreichen einer vorbestimmten Zeit und/oder eines vorbestimmten Grenzwerts für Bewegungsparameter des Handhabungsgeräts zum Veranlassen einer erneuten Kalibrierung des Inertialmesssystems mit diesem zusammen.

Erfindungsgemäß kann vorgesehen sein, dass das Intern-Messsystem Winkelgeber in den Gelenkbereichen des Handhabungsgeräts aufweist. Eine äußerst bevorzugte Weiterbildung der erfindungsgemäßen Vorrichtung sieht vor, dass das Absolut-Messsystem ein bezüglich des Handhabungsgeräts extern angeordnetes Messsystem ist. Ein externes Messsystem hat den Vorteil, dass auch eine sich geringfügig ändernde Robotergeometrie, z.B. durch Temperaturänderung, mit berücksichtigt werden kann.

Die erfindungsgemäße Vorrichtung mit einer Inertialsensorik bedingt im Wesentlichen günstige Kosten, geringes Bauvolumen, Unabhängigkeit von Markierungen jeglicher Art zumindest während des einzelnen Arbeitsschritts und Unempfindlichkeit gegenüber externen Einflüssen und Störungen, wie Beleuchtung, Abschattung, Verschmutzung, magnetischen, elektrischen und elektromagnetischen Feldern etc. Die Erfindung berücksichtigt darüber hinaus die systembedingten Nachteile hoher Sensordrift und der dadurch bedingten Notwendigkeit einer wiederholten Kalibrierung des Sensorsystems, so dass dieses zum Erzielen absolutgenauen Fahrverhaltens eines Roboters optimal nutzbar ist. Als Inertialmesssystem kommen Beschleunigungssensor, Gyroskope oder Systeme mit Messung über erzeugte Felder oder dergleichen in Frage.

Gemäß einer bevorzugten Ausgestaltung ist vorgesehen, dass ein erstes absolut messendes Messsystem auf einem Werkstückträger angeordnet ist. Damit hat das Messsystem eine bekannte Verbindung mit dem Werkstückträger hat und alle Zielpunkte bezüglich des Werkstückträgers definiert sind, dann muss der Bezug zwischen dem Werkstückträger bzw. Werkstück und dem Roboter nicht vorher vermessen werden, da diese Information automatisch erfasst wird. Der Roboter fährt hierzu vor das absolut messende System und die aktuelle Roboterposition wird ermittelt (Bezug Roboter-Fußpunkt zum Referenzierpunkt). Gleichzeitig wird auch diese Position bezüglich des Werkstückträgers (des Werkstücks) bestimmt. Damit sind alle Zielpunkte durch Framearithmetik auch bezüglich des Roboter bekannt und können mit hoher Genauigkeit (durch die Inertialsensoren) angefahren werden.

Eine erfindungsgemäße Vorrichtung eignet sich bei Verwendung gemeinsam mit einer Anzahl weiterer solcher Vorrichtungen zum Steuern zumindest zeitweise kooperierender Handhabungsgeräte, wobei entsprechend jeweils das erfindungsgemäße Verfahren eingesetzt wird.

Durch die Erfindung wird, ausgehend von einer vorgegebenen Offline-Programmierung des Betriebs eines Werkzeugs an einem Roboter das sogenannte händische Nachteachen durch ein automatisches Nachteachen in der erfindungsgemäß vorgesehenen Weise mittels des Inertialmesssystems ersetzt. Dadurch, dass das Inertialmesssystem möglichst in unmittelbarer Nähe des Arbeitspunkts des Werkzeugs oder aber am Arbeitspunkt selbst, beispielsweise bei Schweißzangen im Bereich der Elektroden angebracht wird, können Werkzeugungenauigkeiten, die beispielsweise bei Schweißzangen im Bereich von wenigen Millimetern bis zu mehreren Zentimetern betragen können, durch das erfindungsgemäße Verfahren kompensiert und damit diese Ungenauigkeiten ausgeschaltet werden. Das Anbringen im Bereich der Schweißelektroden bei einer Schweißzange ist beispielsweise möglich, wenn das erfindungsgemäße Nachteachen zunächst an einem Werkstück ohne Bearbeitung desselben, also ohne beispielsweise Erhitzen von Schweißelektroden, erfolgt. Nach erfolgtem Teachen kann das Inertialmesssystem wieder entfernt werden und aufgrund der erfindungsgemäßen Kalibrierung dann eine korrekte Bearbeitung des Werkstücks durchgeführt werden.

Weitere Eigenschaften und Vorteile der Erfindung ergeben sich aus den Unteransprüchen sowie der nachfolgenden Beschreibung von Ausführungsbeispielen anhand der Zeichnung. Es zeigt:
- Fig. 1: eine schematische Darstellung eines werkzeugbestückten Handhabungsgeräts in Form eines Mehrachs-Industrieroboters sowie einer erfindungsgemäßen Vorrichtung zum hochgenauen Positionieren des Werkzeugs;
- Fig. 2: eine schematische Darstellung eines gemäß dem erfindungsgemäßen Verfahren bewegten Roboters in seinem Arbeitsbereich;
- Fig. 3: ein Ablaufdiagramm einer im Rahmen des erfindungsgemäßen Verfahren durchgeführten Sensorkalibrierung;
- Fig. 4: ein Ablaufdiagramm einer im Rahmen des erfindungsgemäßen Verfahrens erfolgenden Überprüfung einer Sensorgenauigkeit;
- Fig. 5: ein Ablaufdiagramm einer ersten Form einer im Zuge des erfindungsgemäßen Verfahrens stattfindenden Positionskorrektur;
- Fig. 6: ein Ablaufdiagramm einer zweiten Form der im Verlauf des erfindungsgemäßen Verfahrens stattfindenden Positionskorrektur; und
- Fig. 7: ein Ablaufdiagramm eines im Verlaufe des erfindungsgemäßen Verfahrens stattfindenden automatischen Teaching-Prozesses.

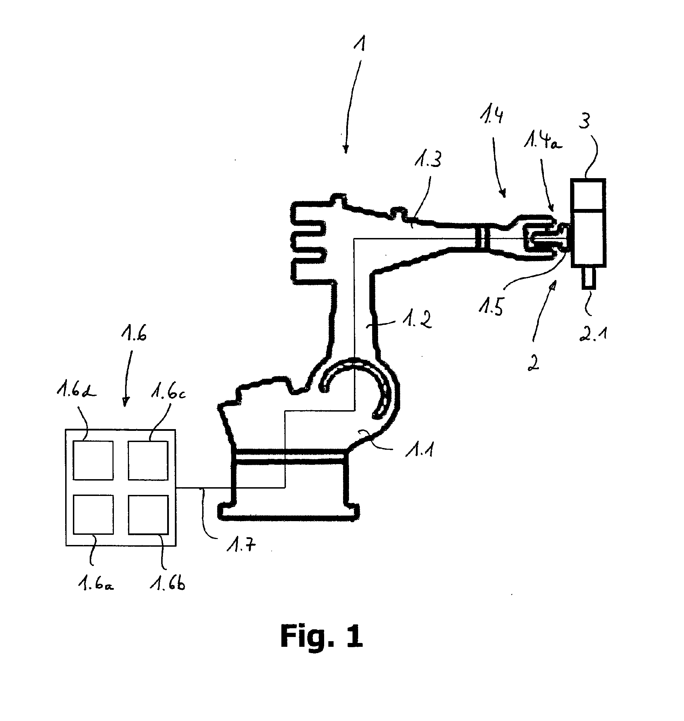

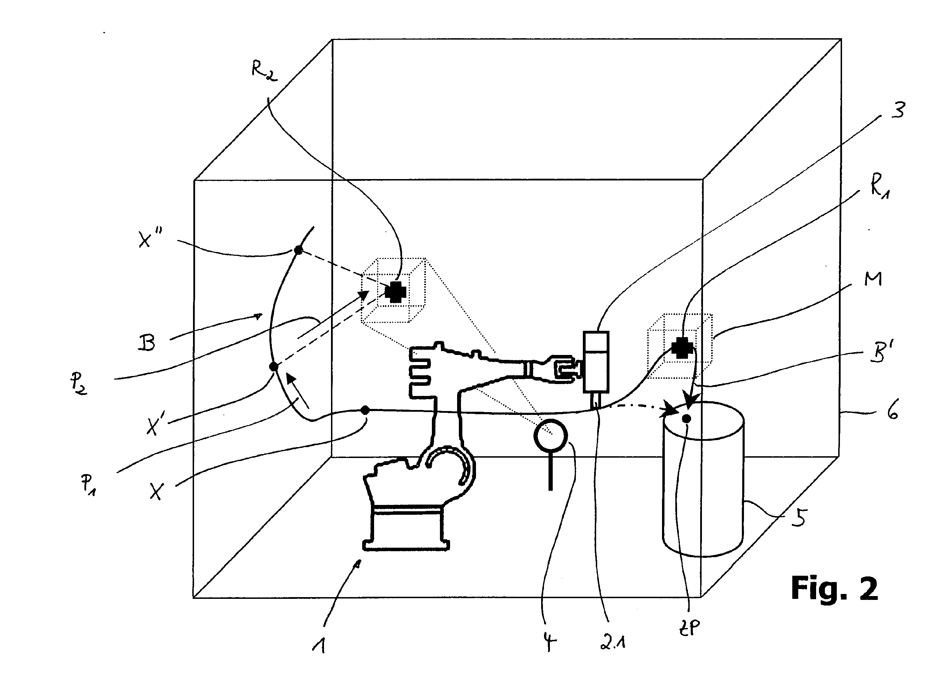

Die Fig. 1 zeigt schematisch ein Handhabungsgerät in Form eines Sechsachs-Industrieroboters 1 mit Karussell 1.1, Schwinge 1.2, Arm 1.3 und Hand 1.4. An einem distalen Ende 1.4a der Roboterhand 1.4 ist ein Handflansch 1.5 angeordnet, an dem gemäß der Fig. 1 ein durch das Handhabungsgerät zu positionierendes Werkzeug 2, beispielsweise ein Laser-Schneidwerkzeug, angeordnet und starr befestigt ist. Der sogenannten Tool Center Point (TCP) des Werkzeugs 2 ist mit 2.1 bezeichnet; der TCP stellt die Werkzeugspitze des Werkzeugs 2 dar. Es handelt sich um denjenigen Punkt des Roboters, der mit einem zu bearbeitenden Objekt (vergl. Fig. 2) in Wechselwirkung treten soll und dessen genaue Positionierung folglich von großer Bedeutung ist.

In direkter Verbindung mit dem Werkzeug 2 ist-gemäß Fig. 1 ein Inertialmesssystem 3 vorgesehen, dessen Funktionsweise im Rahmen der vorliegenden Erfindung im Folgenden ausführlich dargestellt wird und das grundsätzlich dazu dient, eine hochgenaue (absolutgenaue) Positionierung insbesondere der Werkzeugspitze 2.1 zu erreichen.

Ferner ist zum Steuern des Roboters 1 eine Steuerungseinrichtung 1.6 vorgesehen, die unter anderem eine Speichereinrichtung 1.6a für Positionsdaten und dergleichen, eine Überwachungseinrichtung 1.6b zum Überwachen von Bewegungsparametern des Roboters 1, eine Kalibriereinrichtung 1.6c zum Kalibrieren des Inertialmesssystems 3 sowie eine Vergleichseinrichtung 1.6d für Positionsmesssignale aufweist. Die Steuerungseinrichtung 1.6 ist über Leitungsmittel 1.7 mit den zu steuernden Einrichtungen des Roboters 1 (wie Antrieben; nicht gezeigt) sowie mit dem Werkzeug 2 und dem Inertialmesssystem 3 verbunden.

Der Einsatz eines Inertialmesssystems 3 in der Nähe des Roboter-TCP 2.1 stellt die Grundidee der vorliegenden Erfindung dar. Es ist auf diese Weise möglich, ausgehend von einem Abgleichpunkt (Referenzpunkt, Kalibrierpunkt) in der Nähe eines anzufahrenden Zielpunktes, beispielsweise eines Bearbeitungspunktes auf einem zu bearbeitenden Objekt, für eine begrenzte Zeit und innerhalb eines begrenzten Raumes mit sehr hoher Genauigkeit zu fahren.

Die Erfindung verwendet - wie gesagt - ein Inertialmesssystem, um ein absolutgenaues Verfahren des Roboters zu ermöglichen.

Die Fig. 2 zeigt einen Roboter 1 sowie ein Objekt 5, das gemeinsam mit dem Roboter 1 in einem Arbeitsbereich 6 des Roboters angeordnet ist. Weiterhin ist in dem Arbeitsbereich 6 ein externes Messsystem 4 angeordnet, mit dem eine Position des Roboters 1 prinzipiell auch unter speziellen äußeren Randbedingungen genau bestimmbar ist, wie in der gewählten Darstellung durch die punktierten Linien angedeutet. Bei dem externen Messsystem 4 kann es sich beispielsweise um ein optisches Messsystem, wie eine Kamera oder ein Lasermesssystem, oder Potentiometer oder dergleichen handeln. Derartige externe Messsysteme 4 sind jedoch gegen äußere Einflüsse wie Abschattungen oder veränderte Lichtverhältnisse anfällig und können so insbesondere nicht jeden Abschnitt eines Arbeitsbereichs eines Roboters erfassen, so dass zu Positionsüberwachung eines Roboters eine komplexe Vielzahl derartiger Messsysteme erforderlich wäre. Analog zur Darstellung der Fig. 1 trägt der Roboter 1 an seiner Hand ein Werkzeug 2 mit TCP 2.1 an dem in starrer Verbindung ein Inertialmesssystem 3 angeordnet ist, wobei Letzteres gemäß Fig. 1 mit der Steuerungseinrichtung 1.6 (hier nicht gezeigt) des Roboters 1 zusammenwirkt.

Der Roboter 1 soll mit seinem TCP 2.1 absolutgenau zu einem Zielpunkt ZP verfahren werden, der gemäß der Fig. 2 auf dem Objekt 5, beispielsweise als Bearbeitungspunkt, vorgegeben ist.

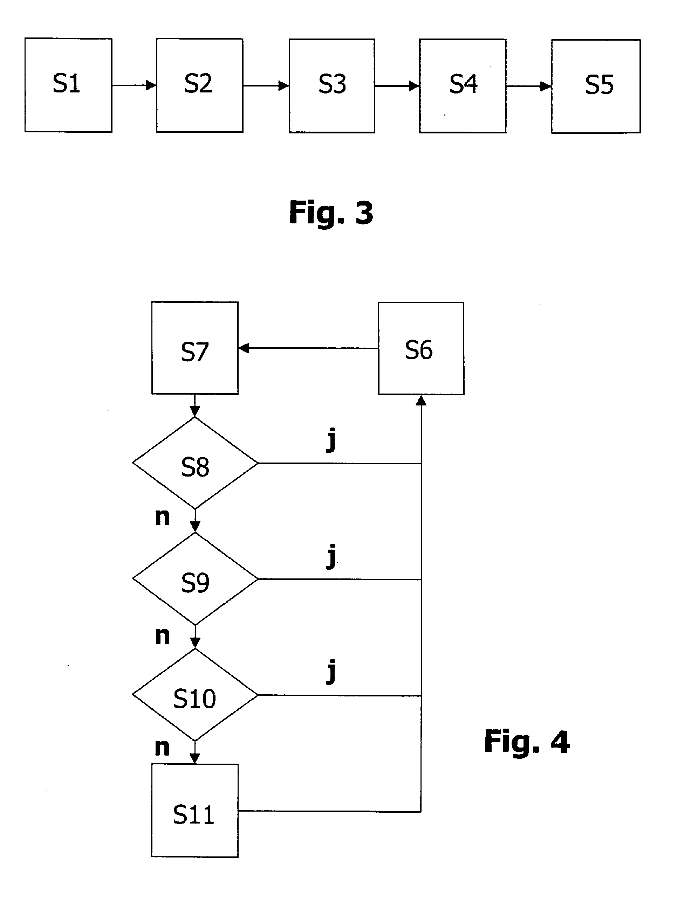

Der Roboter 1 bewegt sich mit seinem TCP 2.1 entlang einer Bahn B, wobei ein Bewegungsablauf des Roboters 1 zum Verfahren auf der Bahn B in einem in der Steuerungseinrichtung 1.6 abgelegten Steuerungsprogramm enthalten ist. Erfindungsgemäß fährt der Roboter 1 die Werkzeugspitze 2.1 nicht direkt zum Zielpunkt (strichpunktierter Bahnverlauf in Fig. 3), sondern zunächst zu einem in der Nähe des Zielpunkts ZP angeordneten Referenzpunkt R₁, in dem ein Abgleichen (Kalibrierung) des Inertialmesssystems 3 stattfindet. Anschließend verfährt der Roboter 1 den TCP 2.1 entlang eines letzten Bahnteilstücks B' mit absoluter Genauigkeit zum Zielpunkt ZP, wobei Positionsmesssignale des Inertialmesssystems in der Vergleichseinrichtung 1.6d zumindest in der Nähe des Zielpunkts mit dessen Koordinaten verglichen werden, so dass die Steuerungseinrichtung 1.6 die Position des TCP 2.1 so verändern kann, dass eine Positionsabweichung minimiert wird bzw. verschwindet. Zu diesem Zweck liefert die Vergleichseinrichtung 1.6d bestimmte Vergleichssignale an die Steuerungseinrichtung 1.6.

Welt, Roboter(sockel), Werkzeug (TCP) und Werkstück-Basis sind jeweils eigene Koordinatensysteme zugeordnet, wobei diese Objekte in einem bekannten vermessenen Bezug zueinander stehen, der in bekannter Weise angeordnet werden kann.

Um im Punkt R₁ das Inertialmesssystem 3 abgleichen zu können, muss in R₁ eine Position des Roboters 1 bzw. des TCP 2.1 absolut bekannt sein. In diesem Zusammenhang existieren erfindungsgemäß zwei grundsätzliche Alternativen: Wie in der Fig. 3 dargestellt, kann sich ein externes Messsystem 4 im Arbeitsbereich 6 des Roboters 1 befinden, mit dem sich die Position des Roboters 1 an einem Punkt, beispielsweise dem Punkt R₁, eindeutig bestimmen lässt. Damit ist in diesem Punkt die Position des Roboters 1 bzw. des TCP 2.1 hochgenau bekannt, und das Inertialmesssystem 3 kann mit dieser Position abgeglichen werden. Der Begriff des "Abgleichens" des Inertialmesssystems 3 ist dabei grundsätzlich wie folgt zu verstehen: Bei einem Inertialmesssystem lässt sich nach zweimaliger Integration der Messwerte lediglich eine relative Position bezogen auf einen Ausgangspunkt der Messung bestimmen. Dieser Ausgangspunkt der Messung stellt sich mathematisch als eine erste Integrationskonstante p₀ dar, während die bei einer zweimaligen Integration notwendigerweise auftauchende zweite Integrationskonstante v₀ eine eventuell vorhandene konstante Grundgeschwindkeit des TCP 2.1 angibt, wozu die Daten des roboterinternen Messsystems (Resolverdaten) herangezogen werden können. Vorzugsweise erfolgt die Kalibrierung im Stillstand, beispielsweise in dem Roboter 1 im Punkt R₁ kurz anhält, so dass dann v₀=0 gilt.

Alternativ zu dem vorstehend beschriebenem "aktiven" Einsatz des externen Messsystems 4 bei einer Roboterbewegung, ist es auch möglich, einen oder mehrere Referenzpunkte R₁, R₂ im Raum einmalig, d.h. beispielsweise bei der Installation des Roboters 1 in dem Arbeitsbereich 6 mittels des externen Messsystems 4 hochgenau zu vermessen und die gemessenen Positionswerte zusätzlich zu den Bearbeitungspunkten, wie dem Zielpunkt ZP, in der Steuerungseinrichtung 1.6 (Speichereinrichtung 1.6a) abzulegen.

Für jeden Referenzpunkt R₁, R₂ wird vorzugsweise die Position sowohl im Koordinatensystem des Roboters als auch als absolute Position im Arbeitsbereich 6, die durch Vermessung mittels des externen Messsystems 4 bestimmt wurde, hinterlegt. Zudem ist beim Verfahren des Roboters 1 zu diesen Punkten über ein regelmäßig vorhandenes internes Messsystem des Roboters 1, z.B. in Form einer Anzahl von in Gelenke des Roboters 1 integrierter Winkelgeber (Resolver; hier nicht dargestellt), auch dessen interne Konfiguration zum Erreichen der Referenzpunkte R₁, R₂ bekannt, so dass diese aufgrund der sehr hohen Wiederholgenauigkeit des Roboters auch mit abgeschalteter Sensorik (externes Messsystem 4) wieder hochgenau angefahren werden können. Anschließend wird, wie zuvor beschrieben, über die abgespeicherten Positionsmesswerte das Inertialmesssystem 3 abgeglichen. Das zuletzt beschriebene Positionierungsverfahren ist einfacher als das zuvor beschriebene mit aktivem externem Messsystem 4, bedingt jedoch dem prinzipiellen Nachteil, dass Abweichungen durch veränderte Randbedingungen, wie z.B. Temperatur oder Last, nicht mit berücksichtigt werden.

Es ist erfindungsgemäß von Vorteil, wenn der Abgleichpunkt, bzw. die Abgleichpunkte (Referenzpunkte R₁, R₂) in der Nähe des Bearbeitungspunkts (Zielpunkt ZP) angebracht ist bzw. sind, um nach erfolgtem Abgleich auf kürzestem Weg zum programmierten Zielpunkt ZP zu kommen. Damit wird der Integrationsfehler bei Inertialmesssystemen (Drift etc.) gering gehalten.

Darüber hinaus ist erfindungsgemäß ein Sensor des Inertialmesssystems 3 möglichst nahe am TCP 2.1 des Roboters angebracht, um auch Verformungen des Werkzeugs, die insbesondere auch bei Beschädigungen desselben auftreten können, zu erfassen.

Im Falle der vorstehend beschriebenen aktiven Nutzung des externen Messsystems 4 zur Kalibrierung muss der Roboter 1 einen Punkt innerhalb eines räumlichen Messbereichs M des externen Messsystems 4 anfahren, was ihm aufgrund seiner Wiederholgenauigkeit leicht gelingt. Anstatt also mit einer vorab gespeicherten Position zum Kalibrieren des Inertialmessystems 3 zu arbeiten, wird in diesem Fall die Position des Referenzpunkts R₁, R₂ vom Messsystem 4 ausgelesen. Ein derartiges Verfahren mit aktivem externen Messsystem 4 hat den Vorteil, dass auch eine sich geringfügig ändernde Robotergeometrie, z.B. durch Temperaturänderung, Last oder Beschädigung, kompensiert werden kann.

Idealerweise sollte eine Kalibrierung des Inertialmesssystems 3 vor Beginn eines neuen Prozesszyklus erfolgen, d.h. jedesmal wenn der Roboter 1 mit seinem Werkzeug 2 einen Zielpunkt ZP zum Bearbeiten eines Objektes 5 anfährt. ES kann aufgrund der Drift des Inertialmesssystems 3 erforderlich sein, das Inertialmesssystem 3 während eines laufenden Prozesses erneut abzugleichen. Zu diesem Zweck ist in der Steuerungseinrichtung 1.6 (Fig. 1) eine Überwachungseinrichtung 1.6b vorgesehen, die zumindest eine seit dem letzten Abgleichvorgang vergangene Zeit t, vorteilhafterweise jedoch auch weitere Bewegungsparameter des Roboters 1, wie eine Beschleunigung, überwacht, da sich insbesondere plötzliche Geschwindigkeitsänderungen ebenfalls nachteilig auf die Genauigkeit des Inertialmesssystems 3 auswirken können. Zur erneuten Kalibrierung muss wiederum eine der Referenzpositionen R₁, R₂ angefahren werden. Dabei darf der Roboter 1 grundsätzlich nicht von irgendeinem Ort auf seiner programmierten Bahn B auf kürzestem Weg zu einer der Positionen R₁, R₂ verfahren, da hierbei die Gefahr einer Kollision mit weiteren im Arbeitsbereich 6 vorhandenen Objekten (nicht gezeigt) oder kooperierenden Robotern (nicht gezeigt) bestünde. Um derartige Kollisionen zu vermeiden, ist es heutzutage bei Roboteranwendungen üblich, einen zusätzlichen Rückzugspfad zu programmieren, den der Roboter 1 benutzt, um an den Referenzpunkt R₁, R₂ zu gelangen. Alternativ kann der Roboter 1, wie im linken oberen Bereich der Fig. 2 dargestellt, rückwärts entlang seiner Bahn B zurückfahren (Pfeil P₁) bis er an einen Punkt X, X', X'' kommt, von dem aus eine Bewegung (gestrichelte Linien, Pfeil P₂ in Fig. 2) zum nächsten Referenzpunkt P₂ gefahrlos möglich ist. Hierfür müssen entlang der Bahn B entsprechende Punkte X, X', X" definiert und in der Steuerungseinrichtung 1.6 des Roboters 1 abgelegt werden.

Die Fig. 3 schreibt anhand eines Flussdiagramms einen innerhalb des erfindungsgemäßen Verfahren ablaufenden Kalibriervorgang. Dabei sind grundsätzlich zwei Fälle zu unterscheiden: a) Kalibrierung mit vorab gespeicherter Referenzposition und b) Kalibrierung mit aktivem externem Messsystem (vergl. Fig. 2). Im ersten Fall wird in Schritt S1 zunächst das Inertialmessystem 3 (Fig. 1, 2) offline geschaltet, d.h. Signale des Inertialmesssystems werden als unbeachtlich qualifiziert. Anschließend verfährt der Roboter zu Referenzposition R₁, R₂ (Schritt S2). Dort wird eine absolute Position, d.h. ein Null- oder Ausgangspunkt des Inertialmesssystems 3 wieder hergestellt (Schritt S3). Anschließend werden in Schritt S4 die Signale des Inertialmesssystems 3 wieder als beachtlich qualifiziert, und der Roboter 1 verfährt (mit absoluter Genauigkeit) zur nächsten (Ziel-)Position.

Im Falle einer Kalibrierung mit aktivem externen Messsystem 4 verfährt der Roboter 1 in Schritt S2 alternativ in den Messbereich M des externen Messsystems 4, woraufhin in Schritt S3 durch das Messsystem 4 eine absolute Position des Roboters 1 bestimmt wird. Der restliche Verfahrensablauf entspricht dem vorstehend anhand der ersten Alternative Geschilderten.

Die Fig. 4 zeigt anhand eines Ablaufdiagramms, wie innerhalb des erfindungsgemäßen Verfahrens eine Genauigkeitsabweichung des Inertialmesssystems erfasst wird: Nach in Schritt S6 (vergl. Schritt S3 der Fig. 3) erfolgter Kalibrierung, wird in Schritt S7 an die Überwachungseinrichtung 1.6b (Fig. 1) gemeldet, dass das Inertialmesssystem 3 nunmehr kalibriert sei. Die Überwachungseinrichtung 1.6b nimmt daraufhin Überwachungen S8, S9, S10 dahingehend vor, ob eine maximale, seit der Kalibrierung vergangene Zeit bzw. eine maximale Verfahrstrecke bzw. eine maximale Beschleunigung erreicht oder überschritten worden sind. Ist dies jeweils nicht der Fall (n), können Ausgaben des Inertialmesssystems 3 zum Korrigieren der Roboterbewegung benutzt werden (Schritt S11). Andernfalls (j) erfolgt in Schritt S6 eine erneute Kalibrierung des Inertialmesssystems.

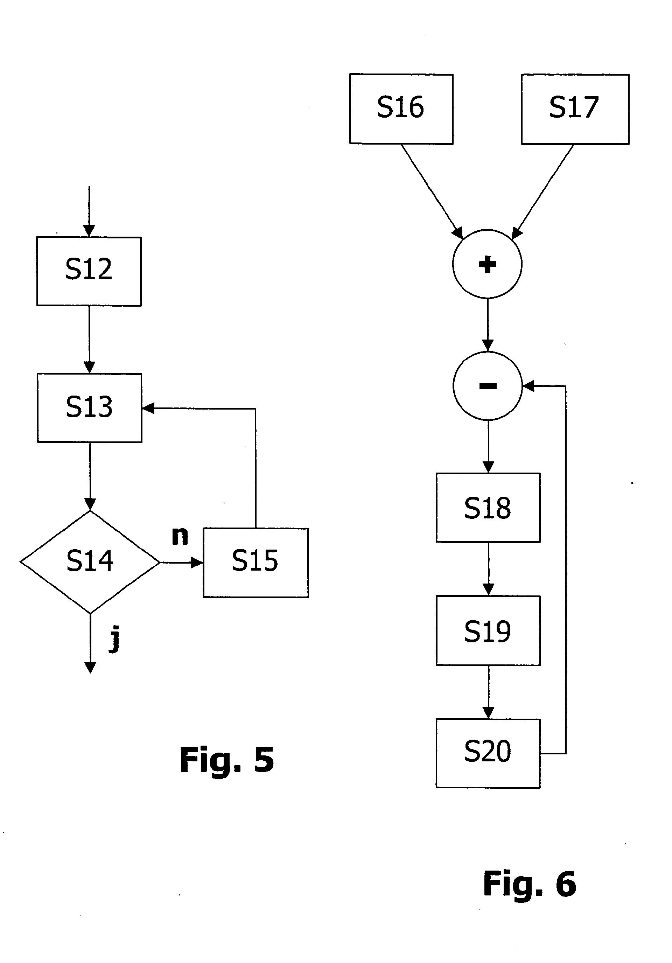

Die Fig. 5 zeigt anhand eines Ablaufdiagramms, wie im Verlauf des erfindungsgemäßen Verfahrens die Positionskorrektur des Roboters 1 bzw. des TCP 2.1 erfolgt. Gemäß der Fig. 5 wird die Position nur im Zielpunkt ZP korrigiert. Der Roboter 1 fährt allein nach Maßgabe seines internen Messsystems und ohne Unterstützung durch das Inertialmesssystem 3 in die Nähe des Zielpunktes ZP (Schritt S12). Dort wird über das Inertialmesssystem 3 die absolute Position des TCP 2.1 bestimmt, und der Roboter 1 wird um die Abweichung zwischen der momentanen Position und der Sollposition im Zielpunkt ZP verfahren (Schritt S13). Durch die Ungenauigkeit des Roboters 1, beispielsweise aufgrund von Reibungseffekten, Last oder Temperatureinflüssen, wird auch das Verfahren um die Abweichung in Schritt S15 den TCP nicht exakt zur Zielposition führen, d.h. es muss schleifenartig (Abfrage S14; S15) erneut die Abweichung zwischen Ist- und Zielpositionen durch die Vergleichseinrichtung 1.6d (Fig. 1) bestimmt und der Roboter erneut verfahren werden. Dieser Prozess wird gemäß der Fig. 5 so lange wiederholt, bis der Roboter die Zielposition innerhalb eines definierbaren Toleranzbereiches erreicht hat (j).

Gemäß eines alternativen, in der Fig. 6 dargestellten Verfahrensablaufes werden die Sensorsignale des Inertialmesssystems 3 direkt in die Bewegungsführung des Roboters übernommen. Die Position des Roboters wird permanent korrigiert, so dass nicht nur der anzufahrende Punkt genau getroffen, sondern auch die gesamte Bahn absolutgenau gefahren wird. Dies ist z.B. bei kooperierenden Robotern oder auch dann erforderlich, wenn weitere Prozesse auf der Bahn stattfinden. Das Korrekturverfahren gemäß der Fig. 6 erfordert eine sehr präzise und schnelle Inertialsensorik, die in der Lage ist, Daten im Regeltakt des Roboters 1 bzw. der Steuerungseinrichtung 1.6 zur Verfügung zu stellen.

In Schritt S16 wird die gewünschte Roboterposition ermittelt, beispielsweise durch Auslesen eines gespeicherten Werts aus der Speichereinrichtung 1.6c. Zudem wird in Schritt S17 mittels des Inertialmesssystems 3 eine Abweichung von der Sollposition bestimmt. Die vorstehend genannten Informationen werden in der Vergleichseinrichtung 1.6d der Steuerungseinrichtung 1.6 des Roboters 1 zur Verfügung gestellt, wobei Letztere daraus in Schritt S18 eine Strategie zur Positionssteuerung entwickelt und in Schritt S19 die Antriebe (nicht gezeigt) des Roboters 1 anweist, diesen entsprechend zu verfahren. Anschließend erfolgt in Schritt S20 eine Positionsbestimmung des Roboters mittels Inertialsensorik, an die sich schleifenartig eine fortgesetzte Bewegungssteuerung unter Berücksichtigung der in den Schritten S16 und S17 kontinuierlich bestimmten Informationen anschließt.

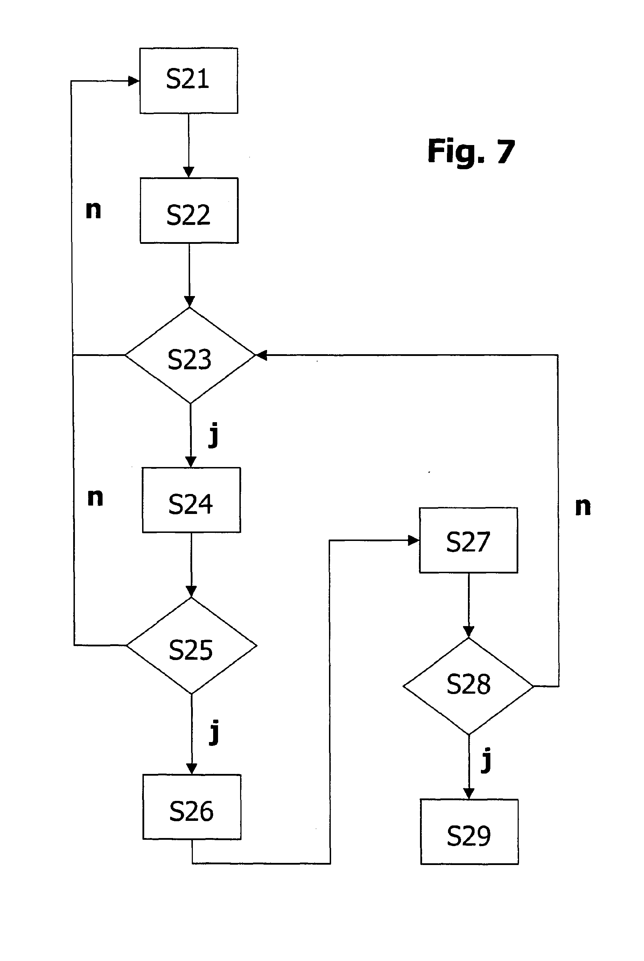

Die Fig. 7 zeigt anhand eines weiteren Ablaufdiagramms einen im Zuge des erfindungsgemäßen Verfahrens möglichen Teachprozess mit automatischem Nachteachen eines oder mehrerer Bahnpunkte des Roboters. Ausgehend von einem kalibrierten Inertialsensor wird zunächst ein zu teachender Punkt angefahren. Ist dieser Punkt mit Hilfe des Inertialmesssystemes exakt bestimmt, wird die Position in der Steuerungseinrichtung 1.6 (Speichereinrichtung 1.6c) gespeichert, und es wird mit dem nächsten Punkt fortgefahren, bis alle Punkte geteacht sind. Muss während des Teachens der Inertialsensor neu kalibriert werden, wird der Prozess unterbrochen, der Roboter fährt eine der Kalibrierpositionen (Referenzpositionen R₁, R₂) an, kalibriert das Inertialmesssystem und setzt den Teachprozess fort. Dies ist in der Fig. 7 detailliert dargestellt:

Zunächst wird in Schritt S21 eine Referenzposition angefahren, anschließend in Schritt S22 das Inertialmesssystem kalibriert und in Schritt S23 geprüft, ob dessen Genauigkeit ausreichend ist. Wird diese Abfrage bejaht (j), so erfolgt in Schritt S24 ein Verfahren zum Zielpunkt. Anschließend erfolgt in Schritt S25 eine erneute Abfrage hinsichtlich der Sensorgenauigkeit des Inertialmesssystems. Wird diese erneut bejaht, so erfolgt in Schritt S26 eine Positionskorrektur, und die aktuelle, dem Zielpunkt entsprechende Roboterposition wird in Schritt S27 "geteacht", d.h. in der Steuerungseinrichtung 1.6 abgespeichert. Anschließend erfolgt in Schritt S28 die Abfrage, ob alle Positionen geteacht worden sind. Ist dies der Fall, so erfolgt in Schritt S29 ein Verfahren in eine Grundstellung.

Wird die Abfrage in Schritt S28 verneint (n), so springt das Verfahren nach Schritt S23 zurück und überprüft demgemäß erneut die Genauigkeit des Inertialmesssystems. Im Falle verneinter Abfragen S23, S25 betreffend die Genauigkeit des Inertialmesssystems kehrt das Verfahren nach Schritt S21 zurück und fährt zwecks einer Kalibrierung erneut eine Referenzposition an.

Im Rahmen der vorliegenden Erfindung können alle Raumpunkte im Arbeitsbereich eines Roboters hochgenau angefahren werden, ohne dass ein genaues Modell oder ein Raster von Stützpunkten benötigt wird. Wird eine genaue Position des TCP an einem Punkt im Arbeitsraum über ein externes Messsystem bestimmt, so passt sich das erfindungsgemäße Verfahren automatisch an sich ändernde Randbedingungen, beispielsweise verbogenes Werkzeug, einen Werkzeugwechsel oder Materialdehnung durch Temperaturänderung, an.

Der Nachteachvorgang ist erfindungsgemäß voll automatisierbar, d.h. der Roboter kann sich selbständig auf neue Bauteile einstellen, wodurch Steuerungsprogramme direkt von einem CAD-System übernommen werden können.

In Verbindung mit Relativbewegungen miteinander kooperierende Roboter, die für eine begrenzte Zeit exakt synchron miteinander fahren sollen, kann auf einen vermessenen Referenzpunkt verzichtet werden. Ausgehend von einem einmal geteachten Punkt können die Relativbewegungen der Roboter mittels der Inertialsensorik korrigiert werden, wenn zum Zeitpunkt der Kooperation mit aktivierter Inertialsensorik verfahren wird. Auf diese Weise können auch Prozesse auf Bauteilen durch Teachen eines einzigen Punktes direkt aus CAD-Systemen übernommen werden, wobei lediglich eine bekannte Orientierung des Bauteils als Voraussetzung bekannt sein muss. Alternativ ist es auch möglich, das Koordinatensystem eines Roboters über die Inertialsensorik anzupassen. Dabei wird nicht mit Relativbewegungen des Roboters relativ zum Bauteil gearbeitet, sondern es wird in einem einmal geteachten Punkt, der mit einem Punkt im CAD-System korreliert, das Koordinatensystem des Roboters mit den vom CAD-System gelieferten Positionen abgeglichen, d.h. die Steuerungseinrichtung des Roboters rechnet die vom CAD-System gelieferten Bauteilkoordinaten in Roboterkoordinaten um und fährt dann diese erfindungsgemäß absolutgenau an.

Bei Verwendung eines Inertialmesssystems, geeignet zur Messung von 6 DOF Position, kann dieses nicht leicht durch Umgebungseinflüsse gestört werden, wie es beispielsweise bei magnetfeldbasierten oder optischen Verfahren zur Positionsbestimmung durch Elektromagnetismus in den Fertigungseinrichtungen bzw. durch Verdeckungen, Lichteffekte oder dergleichen der Fall wäre.

## Patentansprüche

**1.** Verfahren zum genauen Positionieren zumindest eines Teils eines Handhabungsgeräts, insbesondere eines Werkzeugs eines Mehrachs-Industrieroboters, in einem Zielpunkt, **dadurch gekennzeichnet, dass** eine Position des zu positionierenden Teils des Handhabungsgeräts mittels eines Inertialmesssystems bestimmt und aus einer Abweichung der Position des Inertialmesssystems vom Zielpunkt eine Korrektur für die Bewegung des Handhabungsgeräts bestimmt wird.

**2.** Verfahren nach Anspruch 1, **dadurch gekennzeichnet, dass** zunächst ein Kalibrieren des Inertialmesssystem mittels eines (externen) Messsystems erfolgt.

**3.** Verfahren nach Anspruch 1 oder 2, **dadurch gekennzeichnet, dass** das Kalibrieren durch Anfahren eines bekannten Zielpunkts im Raum erfolgt.

**4.** Verfahren nach Anspruch 1, **dadurch gekennzeichnet, dass**
- zum Kalibrieren vor dem Positionieren in einem Arbeitsbereich des Handhabungsgeräts zumindest ein Referenzpunkt in der Nähe des Zielpunkts durch ein in dem Arbeitsbereich des Handhabungsgeräts wirksames Absolut-Messsystem absolut bestimmt wird, wobei das zu positionierende Teil des Handhabungsgeräts zu dem Referenzpunkt verfahren wird;
- im Referenzpunkt das zumindest in der Nähe des zu positionierenden Teils an dem Handhabungsgerät befindliches Inertialmesssystems kalibriert wird; und
- anschließend das zu positionierende Teil des Handhabungeräts zu Zielpunkten gemäß Anspruchs 1 bewegt wird.

**3.** Verfahren nach Anspruch 2, **dadurch gekennzeichnet, dass** zunächst ein Referenzpunkt bestimmt und anschließend das Handhabungsgerät zu diesem verfahren wird.

**4.** Verfahren nach Anspruch 2, **dadurch gekennzeichnet, dass** ein Referenzpunkt nach Verfahren des Handhabungsgeräts in einem Messbereich des Absolut-Messsystems bestimmt wird.

**5.** Verfahren nach einem der Ansprüche 2 bis 4, **dadurch gekennzeichnet, dass** für jede Bewegung zu einem Zielpunkt ein Referenzpunkt bestimmt wird.

**6.** Verfahren nach einem der Ansprüche 1 bis 4, **dadurch gekennzeichnet, dass** absolute Koordinaten eines Referenzpunkts vorab dauerhaft in einer Speichereinrichtung des Handhabungsgeräts abgelegt und im Rahmen einer Wiederholgenauigkeit des Handhabungsgeräts angefahren werden.

**7.** Verfahren nach einem der Ansprüche 1 bis 6, **dadurch gekennzeichnet, dass** wiederholt während der Bewegung zum Zielpunkt eine absolute Position des Handhabungsgeräts mittels des Inertialmesssystems bestimmt und die Bewegung an einen vorgegebenen Bahnverlauf angepasst wird.

**8.** Verfahren nach einem der Ansprüche 1 bis 6, **dadurch gekennzeichnet, dass**
a) ausgehend vom einem Referenzpunkt ein Punkt innerhalb der Wiederholgenauigkeit des Handhabungsgeräts angefahren,
b) anschließend eine Positionsabweichung relativ zum Zielpunkt mittels des Inertialmesssystems bestimmt und dann
c) das Handhabungsgerät um die Positionsabweichung verfahren wird.

**9.** Verfahren nach Anspruch 8, **dadurch gekennzeichnet, dass** die Schritte b) und c) zyklisch wiederholt werden, bis das zu positionierende Teil des Handhabungsgeräts in einem Toleranzbereich um den Zielpunkt positioniert ist.

**10.** Verfahren nach einem der Ansprüche 7 bis 9, **dadurch gekennzeichnet, dass** eine erreichte Zielposition des Handhabungsgeräts anstelle einer in einer Steuerungseinrichtung des Handhabungsgeräts gespeicherten Zielposition abgespeichert wird.

**11.** Verfahren nach Anspruch 10, **dadurch gekennzeichnet, dass** eine Reihe von Zielpunkten nacheinander angefahren werden.

**12.** Verfahren nach Anspruch 11, **dadurch gekennzeichnet, dass** das Anfahren der Zielpunkte vollautomatisch geschieht.

**13.** Verfahren nach Anspruch 11 oder 12, **dadurch gekennzeichnet, dass** während des Anfahrens eine seit der letzten Kalibrierung des Inertialmesssystems vergangene Zeit überwacht und beim Erreichen einer vorbestimmten Abgleichzeit eine erneute Kalibrierung des Inertialmesssystems durchgeführt wird.

**14.** Verfahren nach einem der Ansprüche 12 bis 13, **dadurch gekennzeichnet, dass** weitere Bewegungsparameter des Handhabungsgeräts, wie eine Beschleunigung, überwacht werden, wobei im Falle eines Erreichens jeweils vorbestimmter Grenzwerte für die Bewegungsparameter eine erneute Kalibrierung des Inertialmesssystems durchgeführt wird.

**15.** Verfahren nach Anspruch 13 oder 14, **dadurch gekennzeichnet, dass** das Verfahren zum Referenzpunkt auf einer vorgegebenen Rückzugsbahn erfolgt.

**16.** Verfahren nach Anspruch 15, **dadurch gekennzeichnet, dass** das Handhabungsgerät bis zum Erreichen eines entlang seiner Bewegungsbahn definierten Anfangspunkts der Rückzugsbahn rückwärts auf seiner vorliegenden Bewegungsbahn verfahren wird.

**17.** Vorrichtung zum zumindest zeitweise hochgenauen Positionieren zumindest eines Teils eines Handhabungsgeräts in einem absolut bekannten Zielpunkt, insbesondere eines Werkzeugs eines Mehrachs-Industrieroboters, mit einer Steuerungeinrichtung für eine Bewegungssteuerung des Handhabungsgeräts, **gekennzeichnet durch** ein zumindest in der Nähe des zu positionierenden Teils (2.1) des Handhabungsgeräts (1) an diesem angeordnetes, mit der Steuerungseinrichtung (1.6) zusammenwirkendes Inertialmesssystem (3).

**18.** Vorrichtung nach Anspruch 17, **dadurch gekennzeichnet, dass** das Inertialmesssystem (3) in einer festen, relativen Stellung zum zu positionierenden Teil (2.1) des Handhabungsgeräts (1) angeordnet ist.

**19.** Vorrichtung nach Anspruch 17 oder 18, **dadurch gekennzeichnet, dass** das Inertialmesssystem (3) als Beschleunigungssensor ausgebildet ist.

**20.** Vorrichtung nach einem der Ansprüche 17 bis 19, **gekennzeichnet durch** eine Kalibriereinrichtung (1.6c) zum Abgleichen des Inertialmesssystems (3) in einem Referenzpunkt (R₁, R₂).

**21.** Vorrichtung nach einem der Ansprüche 17 bis 20, **gekennzeichnet durch** eine Überwachungseinrichtung (1.6b) zum Überwachen einer seit der letzten Kalibrierung des Inertialmesssystems (3) vergangenen Zeit (t).

**22.** Vorrichtung nach Anspruch 21, **dadurch gekennzeichnet, dass** die Überwachungseinrichtung (1.6b) zum Überwachen von Bewegungsparametern des Handhabungsgeräts (1), wie einer Beschleunigung, ausgebildet ist.

**23.** Vorrichtung nach Anspruch 21 oder 22, **dadurch gekennzeichnet, dass** die Überwachungseinrichtung (1.6a) bei Erreichen einer vorbestimmten Zeit (t) und/oder eines vorbestimmten Grenzwerts für Bewegungsparameter des Handhabungsgeräts (1) zum Veranlassung einer erneuten Kalibrierung des Inertialmesssystems (3) mit der Kalibriereinrichtung (1.6c) zusammenwirkt.

**24.** Vorrichtung nach einem der Ansprüche 17 bis 23, **gekennzeichnet durch** ein in einem Arbeitsbereich des Handhabungsgeräts wirksames Absolut-Messsystem (4) zum absoluten Bestimmen von Raumpositionen (R₁, R₂) und/oder Positionen des Handhabungsgeräts (1).

**25.** Vorrichtung nach Anspruch 24, **dadurch gekennzeichnet, dass** das Absolut-Messsystem ein extern bezüglich des Handhabungsgeräts (1) angeordnetes Messsystem (4) ist.

**26.** Vorrichtung nach einem der Ansprüche 17 bis 25, **gekennzeichnet durch** ein in oder an dem Handhabungsgerät angeordnetes Intern-Messsystem zum Bestimmen von internen Koordinaten von Positionen des Handhabungsgeräts (1).

**27.** Vorrichtung nach Anspruch 26, **dadurch gekennzeichnet, dass** das Intern-Messsystem Winkelgeber in den Gelenkbereichen des Handhabungsgeräts (1) aufweist.

**28.** Vorrichtung nach Anspruch 24 und 26, **dadurch gekennzeichnet, dass** entsprechende Positionsangaben des Absolut- (4) und Intern-Messsystems in einem Referenzpunkt (R₁, R₂) einander in der Steuerungsrichtung zuordenbar sind.

**29.** Vorrichtung nach einem der Ansprüche 17 bis 28, **gekennzeichnet durch** eine Vergleichseinrichtung (1.6d) zum Vergleichen einer **durch** das Inertialmesssystem (3) gelieferten Positionsangabe zumindest in der Nähe des Zielpunkts (ZP) mit einer Position des Zielpunkts (ZP), wobei in von der Vergleichseinrichtung (1.6d) geliefertes Vergleichssignal für eine Positionskorrektur des Handhabungsgeräts (1) **durch** die Steuerungseinrichtung (1.6) nutzbar ist.

**30.** Vorrichtung nach einem der Ansprüche 17 bis 29, **dadurch gekennzeichnet, dass** ein erstes absolut messendes Messsystem auf einem Werkstückträger angeordnet ist.

**31.** Verwendung einer Mehrzahl von Vorrichtungen gemäß einem der Ansprüche 17 bis 30 zum Steuern zumindest zeitweise kooperierender Handhabungsgeräte (1).

**32.** Einsatz eines Verfahrens gemäß einem der Ansprüche 1 bis 16 zum Steuern einer Mehrzahl von zumindest zeitweise kooperierenden Handhabungsgeräten (1).
